# EUROPEAN PATENT APPLICATION

(11) **EP 4 661 374 A1**
(43) Date of publication of application: **10.12.2025**
(21) Application number: 24180931.8
(22) Date of filing: 07.06.2024
(51) Int. Cl.: H04L 67/1014, H04L 67/1097, H04L 67/12

(54) **METHOD FOR DISTRIBUTING ASSET DATA**

(71) Applicant: ABB SCHWEIZ AG, 5400 Baden (CH)
(72) Inventor: SCHMIDT, Benedikt, 69117 Heidelberg (DE); HEUSCHKEL, Jens, 64331 Weiterstadt (DE); JARVINEN, Pekka, 11341 Stockholm (SE); LOPONEN, Tapio, 13720 Parola (FI); TANTU, Oliver, 68549 Ilvesheim (DE); BAUM, Stefan, 69221 Dossenheim (DE); RODRIGUEZ, Pablo, 69488 Birkenau (DE); SCHOCH, Nicolai, 69120 Heidelberg (DE)
(74) Representative: Maiwald GmbH

(57) **Abstract**

The disclosure relates to a method (100) for distributing asset data among multiple storage locations of a distributed data storage system (10) for one or more industrial plants (2), the asset data relating to one or more assets of the one or more industrial plants (2), the method comprising:
- obtaining usage data indicative of a usage of the asset data; and
- distributing the asset data among the multiple storage locations based on the obtained usage data, wherein the asset data is distributed among storage locations of different entities of the distributed data storage system (10), the entities including at least one storage device (20) of the one or more industrial plants (2), at least one edge device (30) and at least one storage device of a cloud server (40).

## Description

### TECHNICAL FIELD

The present invention relates to a method for distributing asset data among multiple storage locations of a distributed data storage system for one or more industrial plants, one or more computer program products, and a distributed data storage system.

### BACKGROUND

In modern cloud based storage systems for industrial plants, the management of asset data has become a critical component for ensuring efficiency, reliability, and continuous improvement. As industries evolve with the integration of loT (Internet of Things) devices, sensors, and automated systems, the volume of asset data generated by these technologies has increased exponentially. This asset data, often characterized by its high frequency and vast volume, presents significant challenges for cloud based storage systems, particularly those that are centralized or predominantly cloud-based.

High-frequency asset data, which includes continuous streams of information generated by sensors and machines, requires extensive storage capacity. There are many purposes for storing this information. It may not only be important for immediate access and real-time processing but also for archiving and analyzing the data for operational and maintenance reasons, for example. Archiving this asset data may allow for long-term retention, which is beneficial for historical analysis and auditing purposes. Analyzing the archived asset data may provide insights into a system performance, help identify trends, and enable predictive maintenance strategies that can prevent equipment failures and optimize operational efficiency. The costs of resources associated with storing such large volumes of asset data in clouds storage systems can be prohibitively high, not just from the perspective of storage space but also due to the bandwidth required for transferring asset data to and from the cloud. The scalability of data management systems is another critical issue. Traditional centralized storage solutions, as cloud based storage systems often struggle to scale efficiently to meet the increasing demands of industrial asset data. As the amount of data grows, these systems can become overwhelmed, leading to decreased performance and increased latency. Moreover, the traditional cloud based approach of storing only selected datasets poses significant risks regarding data availability and flexibility. In many cases, asset data that is not deemed immediately necessary and therefore not stored can later prove to be important for understanding system performance or for troubleshooting purposes. The inability to foresee every future need for data access and computation means that potentially valuable insights are lost, simply because the data was never stored or was prematurely purged from the system. Additionally, latency is a major concern in centralized systems. In industries where real-time data processing is important for operational safety and efficiency, any delay in data access can have serious repercussions. The time taken to retrieve asset data from a centralized cloud server, especially one not located near the source of data generation, can hinder the responsiveness of systems that rely on quick data turnaround.

Local storage systems on the other hand, e.g., a storage device of an industrial plant, often face limitations when it comes to scalability and the complexity needed for advanced data analytics. Primarily, the storage capacity is physically limited by the hardware available on-site. Expanding this capacity typically requires purchasing additional hardware, which is not only costly but also time-consuming. In contrast, cloud storage can be easily scaled up or down as needed, without any physical changes to hardware. Furthermore, local storage limits data accessibility since asset data is often confined to specific physical locations and may not offer the advanced analytical tools and algorithms provided by cloud services.

Thus, local storage systems often lacks the necessary scalability and sophistication for advanced data analytics, which may be relevant for modern industrial operations. While cloud storage on the other hand offers scalability, it can be prohibitively expensive and introduce unacceptable latency, especially for operations requiring real-time decision-making.

### SUMMARY

The above problem or need is at least partially solved or alleviated by the subject matters of the independent claims of the present disclosure, wherein further examples are incorporated in the dependent claims.

According to an aspect of the present disclosure, there is provided a method for distributing asset data among multiple storage locations of a distributed data storage system for one or more industrial plants, the asset data relating to one or more assets of the one or more industrial plants, the method comprising:
obtaining usage data indicative of a usage of the asset data; and
distributing the asset data among the multiple storage locations based on the obtained usage data, wherein the asset data is distributed among storage locations of different entities of the distributed data storage system, the entities including at least one storage device of the one or more industrial plants, at least one edge device and at least one storage device of a cloud server.

Generally, assets of the one or industrial plants may refer to any component, facility, or resource within the one or more industrial plants that are used for generating, monitoring, processing, or managing data, for example. Assets may comprise both, physical and digital elements for an operation. Physical elements may e.g., include any tangible equipment, machinery, tools, and infrastructure which may be important for the day-to-day operations of an industrial plant. These physical elements may range from large-scale machinery like pumps and turbines to smaller tools and devices for specific tasks within the one or more industrial plants. Digital elements may comprise software, control systems, and data management tools, for example. Software may be used, for example, to precisely control machines, record and analyze production data, or plan maintenance. Control systems may automate processes and ensure they run smoothly, while data management tools may be used to effectively manage and utilize the huge amounts of data generated.

Asset data may e.g., comprise all sorts of data associated with the operation of the one or more industrial plants. This may comprise data such as but not limited to energy usage, maintenance, and/or measurements, for example. Other examples may be data such as but not limited to configuration data, condition data, identification data, and/or safety data. Asset data may also comprise control data, which involves settings and commands used to operate the assets, for example. Control data may include details such as control parameters, setpoints, and/or operational schedules that govern the automated systems within the industrial plant, for example.

Usage data may refer to information that indicates how asset data is accessed and/or used within the system. This may comprise information about a frequency of data retrieval, specific systems, and/or the types of operations performed using this data, for example. In particular, usage data may refer to how asset data within the distributed data storage system are accessed and used. Capturing this data may be advantageous for analyzing where and how asset data are retrieved and utilized within the distributed data storage system, which may be important for optimizing the distribution of data across various storage locations. For example, usage data may comprise a search request or calculation process. The usage data may comprise declarative usage data and/or actual usage data. Declarative usage data may e.g. result from explicit instructions or requests that come from a software or user. For example, software could specify that certain asset data must be available on an edge device because it is required there. Actual usage data may be based on actual access and use of the asset data. For example, it may be determined that a particular asset data is accessed frequently and therefore a decision is made to store that asset data in a location that allows for faster access.

If a search request may be performed, a client such as a software or an interactive session by a user, may e.g., initiate a data query. This may be for specific asset data, such as production metrics, machine status, historical data, or similar. The client may e.g., define search criteria, which may include specific parameters like date ranges, asset types, or particular conditions or values. The cloud server, which may act as a central hub, may receive the query. The cloud server may be responsible for managing and directing traffic of asset data within the distributed data storage system. The cloud server may interpret the query to understand which asset data is being requested and determine the most likely storage location of this asset data based on e.g., previous access patterns, metadata, indexes, or similar. Once the cloud server identifies the most likely storage locations for the requested asset data, it may distribute the query to those specific storage locations. This could involve sending requests to one or multiple locations, such as the storage devices, edge devices, and/or the storage location of the cloud server. The storage location for the cloud server could be e.g., a data lake. Each targeted storage location may process the query locally. This may mean that the storage location searches its own storage based on the query parameters to find the requested asset data. It may happen that the requested asset data does not exist anymore in the distributed data storage system. This can be realized by calculating whether the data exists (data not existing check), or by distributing the request in the distributed data storage system and getting no response in time, which may always be the case if a component fails or lacks asset data. As each storage location may process its part of the query, it may send the found asset data as a result back to the cloud server. In cases where multiple storage locations are queried, each may return a subset of the overall asset data requested, for example. The cloud server may aggregate the results from all storage locations. This may involve compiling the data into a single dataset, removing duplicates, and potentially reordering the results to best match the request. Additional processing such as sorting, filtering, or applying analytics to the results may be performed at the cloud server to enhance the relevance and utility of the information before it is presented to the client. The cloud server, rather than aggregating the results from all storage locations itself, may e.g. coordinate the storage locations from which asset data should be queried. It may provide the necessary security protocols and access details, guiding where and how queries should be performed. The actual task of aggregating the asset data could then be delegated either to the client directly or to a designated node within the system, such as an edge device or a storage device of the industrial plant. This distributed approach to data aggregation not only ensures that data handling may be optimized for network efficiency and speed but also allows for adjustments based on the specific needs and capacities of different parts of the system. Beyond aggregation, a variety of data processing tasks such as filtering, normalization, compression, and more advanced analytics may be distributed across the network. Each component, be it the cloud server or another node within the network may process asset data in a way that best suits its operational context, enhancing the overall responsiveness and flexibility of the distributed data storage system.

It may also be conceivable to perform a calculation process within the distributed data storage system. In a first step if a calculation should be performed, the storage locations of different entities (at least one storage device of the one or more industrial plants, at least one edge device, and at least one storage device of a cloud server) within the distributed system that may contain the asset data needed for the calculation may be identified. This identification may be advantageous as it may determine where the computation will take place and may ensure that all necessary asset data is considered in the computation process. Once the relevant storage locations of different entities are identified, the data storage system may send out calculation requests to each of these storage locations. This may involve transmitting the specifics of the calculation needed so that each storage location knows what computation to perform with the asset data it holds. The calculation process may be performed at multiple storage locations simultaneously, which may significantly speed up the calculation process. Thus, each storage location of the different entities of the distributed data storage system may process the calculation request locally with the asset data available to it. This local processing may generate intermediate results, which are partial outcomes that may later be combined to form the final calculation result. After the intermediate results are generated at each storage location, they may be sent back to the at least one storage device of a cloud server, where they may be combined to produce a final result for the calculation request and stored.

The calculation process may specify a priority order for where the intermediate results should be generated if the asset data exists across multiple storage locations, for example. The calculation on the at least one storage device of a cloud server may be first priority as the at least one storage device of a cloud server may possess robust computational capabilities and scalability and thus may handle large volumes of data and complex computations more efficiently. The second priority may be the at least one edge device. Edge devices may be located close to the data source, such as manufacturing equipment, sensors, or other operational technology within the industrial plant. This proximity may allow the at least one edge device to process data with minimal latency, which may be advantageous for real-time or near-real-time applications where quick decision-making is important. By leveraging the at least one edge device for processing when possible, the use of the at least one storage device of a cloud server may be reduced, which might be more expensive. The at least one storage device of the one or more industrial plants may be utilized last for calculation requests. Compared to the at least one storage device of a cloud server or at least one edge device, an at least one storage device of the one or more industrial plants may have limited computational power, for example.

A distributed data storage system may be an architecture designed to store and manage data across multiple storage locations of the different entities of the distributed data storage system, which may be integrated through a network, for example. The distributed data storage system may use a network of interconnected storage locations of the different entities that may be spread across different geographical areas or hosted on various platforms, for example. Asset data within the distributed data storage system may not merely be stored but also processed across the multiple storage locations in the distributed data storage system, using techniques such as downsampling to reduce data volume and/or prepare the asset data for applications, for example. Thus, the distributed data storage system may also be understood as a distributed software architecture that may improve performance and scalability by splitting computational tasks across multiple storage locations of the different entities of the distributed data storage system. This distributed data storage system may be designed to enhance data accessibility, reliability, and scalability by distributing data across the different entities of the distributed data storage system. The distributed data storage system may e.g., include storage devices in the one or more industrial plants as a local storage, at least one edge device for processing data close to the local storage, and cloud servers for scalable and remote data storage solutions, for example. Local storage in industrial plants e.g., may be on-premise storage solutions such as one or more drives that hold data directly within the industrial plants. The proximity of data storage to the operational machinery and equipment may reduce latency and speed up a response time for local data processing needs, for example. Edge devices may be provided at an "edge" of the distributed data storage system, these devices process data close to where it is generated. The at least one edge device may be configured to perform edge computing. Edge computing may handle data processing tasks at or near the source of data generation, e.g., the one or more industrial plants, which decreases bandwidth use across the network and speeds up processing times by avoiding the latency that comes with sending data to a cloud server. Cloud servers on the other hand may provide scalable and flexible data storage solutions that are accessible remotely. Cloud servers may be suitable e.g., for handling vast amounts of data that require long-term storage and are accessed less frequently. Additionally, cloud servers may deploy powerful computing resources to perform complex analyses and data processing tasks that are not time-sensitive, for example. Moreover, this approach may allow for scalability, as additional edge or cloud resources may be integrated.

The method of the first aspect may, in particular, be an at least partially or fully computer-implemented method. This means that at least one, multiple, or all of the steps of the method may be carried out by a data processing system or distributed data storage system one or more data processing apparatuses, which may be in the form of computers or computing units, which may comprise one or more processors and data storages or memories. Different steps may be carried out by the same or by different data processing apparatuses of the data processing system.

The invention is based on the finding that traditional methods of storing asset data for industrial plants, particularly in centralized or cloud-based systems, are not resource-friendly. This is especially true for high-frequency data, which requires extensive storage space and incurs significant costs. Traditional centralized storage systems, particularly those relying heavily on cloud services, often face challenges with scalability, high operational costs, and latency issues. These systems are not designed to effectively handle the dynamic nature of industrial data, which can vary greatly in terms of access frequency and processing requirements. Moreover, the current approach to data storage where only selected datasets are retained often fails to anticipate future needs for data access and computation, for example. This can lead to significant gaps in data availability, especially when unforeseen requirements arise or when interactive usage patterns demand access to data not previously stored.

Hadoop Distributed File System (HDFS) is a method for storing very large files with streaming data access patterns, running on clusters of commodity hardware, like cloud servers for Big Data storage. The present invention builds upon and modifies the foundational principles of HDFS to address the specific requirements of industrial environments. This means that the invention is optimized e.g., for distributing asset data among multiple storage locations of a distributed data storage system for one or more industrial plants and/or distributed asset data processing.

One concept of the invention is the integration of edge computing, which processes data closer to its source, such as sensors and machinery on the production site, for example, thereby significantly reducing latency compared to traditional setups that rely solely on central nodes. Edge computing may ensure that asset data is analyzed almost instantaneously, enabling faster responses to changing conditions on the ground. Additionally, the invention may allow for scalable adjustments to storage and computation resources that are responsive to immediate needs and operational changes, thus offering efficient infrastructure. The distributed data storage system may provide a sophisticated mix of local, edge, and cloud storage solutions, selecting the most appropriate storage medium based on e.g., frequency of data access, which helps to manage performance. Thus, the invention may introduce dynamic data management strategies that adjust where and how data is stored and processed based on ongoing analysis of usage patterns and predictive insights, for example.

In an example, asset data may comprise one or more operational data of the one or more industrial plants and/or application data of an application of the one or more industrial plants.

Operational data may comprise e.g., a variety of metrics and sensor readings that track the real-time performance of machinery and processes within industrial plants. Operational data may comprise such as but not limited to machine performance data such as speed, temperature, pressure, and energy consumption, for example. Other examples of operational data may be such as readings from various sensors that monitor conditions for operational integrity and safety, for example. Application data, on the other hand, may refer to information used by software applications that control, monitor, and manage industrial processes. This may comprise control data from control systems that automate and manage the operation of machines, monitoring software that tracks plant health and performance, and analytics data used for optimizing processes and predictive maintenance, for example. Application data may refer to data generated by or related to specific applications that run on the different entities of the distributed data storage system of the one or more industrial plants, for example. These applications may be designed to process, analyze, or otherwise manipulate operational data, for example. This may be e.g., to process the operational data into a suitable form for storage.

In an example, the asset data may be transformed for distributing the asset data among the multiple storage locations, the transformation comprising compression of the asset data and/or aggregation of the asset data.

Compression of asset data may refer to the process of reducing the size of the asset data. By compressing the asset data, it may occupy less storage space in the storage locations of the different entities of the distributed data storage system, which may save resources. Additionally, compressed asset data may e.g., require less bandwidth to transfer between different storage locations, which may enhance the speed of asset data transmission across the distributed data storage system. Aggregation of asset data, on the other hand, may e.g., involve combining multiple data points or datasets into a summarized form. This method may be particularly useful for managing large volumes of data that need to be actively handled and stored. Aggregation may have various forms, such as averaging sensor readings over a specific period, summing up total production outputs for daily reports, or compiling performance metrics into broader, strategic overviews, for example. This may not only reduce the volume of data that needs to be stored but also may simplify data management and enhance processing speed when querying large datasets, for example. For example, if an analysis requires only daily summaries of performance metrics, storing an aggregated daily dataset instead of minute-by-minute data may significantly decrease the computational load when performing historical analysis or predictive modelling. The compression and/or aggregation of asset data may also comprise deletion of some data, e.g., data points or datasets with fine resolution to obtain a more coarse resolution. In the context of aggregation, deletion may refer to the removal of individual data points after they have been incorporated into an aggregated summary. For example, if minute-by-minute temperature readings are averaged into hourly averages, the individual minute readings may no longer be necessary and could be deleted to save space.

Also more complex transformations such as e.g. Fast Fourier Transformation (FFT) and wavelet transformation into the processing of asset data within a distributed data storage system may be conceivable. By applying these transformations, the distributed data storage system may perform more sophisticated aggregations beyond simple averaging or summing. For example, asset data aggregated in the frequency domain using FFT could highlight underlying patterns or anomalies that might be obscured in time-domain aggregations. Similarly, wavelets may compress data based on the importance of different time segments, preserving detail during critical events and reducing resolution when less is happening. For example, asset data may be initially processed at the edge device located near the asset data sources, utilizing FFT or wavelets to compress and simplify the asset data before it is sent to the cloud server. This localized processing may reduce the bandwidth needed for asset data transfer and speed up the overall asset data management process. Additionally, after the transformation, it may be possible to selectively delete less significant asset data, which helps in managing storage capacity more effectively. This selective retention may ensure that only the most relevant asset data is stored long-term, enhancing e.g. the quality of historical analyses and predictive modelling.

For example, an industrial plant may be equipped with numerous sensors. These sensors may be critical for monitoring various operational parameters such as a control of a motor, a machine temperature, or pressure inside production machines. Each sensor may be programmed to record asset data every few seconds, minutes, or similar, thereby generating a vast amount of high-frequency asset data.

To handle this high-frequency asset data, the industrial plant may employ edge devices installed within or close to the plant. These edge devices may be configured for initially processing the influx of asset data directly at the source. For example, temperature sensors that collect data every minute may undergo a first level of data processing on these edge devices. The first step in this processing may be data compression. This compression may reduce the size of the asset data, thereby minimizing the required storage space and lessening the bandwidth needed for data that must be transmitted to other storage locations. The compression algorithms may be designed to ensure no critical information is lost, maintaining the integrity and utility of the asset data.

Following compression, the edge devices may perform a second operation, namely asset data aggregation. Rather than retaining every single measurement, the edge devices may calculate average, maximum, or minimum values for each hour, for example. This aggregated asset data may still provide valuable insights into the conditions and performance of the plants but significantly reduces the volume of data that needs to be stored and further processed.

The processed asset data, now both compressed and aggregated, may then be transmitted to the cloud at predetermined intervals, such as once per hour, for example. In the cloud, this data may undergo further aggregation, possibly into daily or weekly reports, and may be stored for long-term analysis to provide deeper insights into operational efficiency and machine health. The cloud's infrastructure may support extensive analytics capabilities, facilitating advanced operations such as predictive maintenance and optimization of production processes, for example.

Thus, compressing and/or aggregating asset data at different entities of the distributed data storage system, such as the edge device, followed by further processing and analysis in the cloud server, may enable faster response times for operational adjustments and enhance overall data analysis efficiency, for example. By reducing the volume of data that needs to be transmitted and stored, the distributed data storage system may ensure that critical information is readily available for making informed operational decisions and strategic planning, for example.

In an example, the transformation of the asset data may be executed on one or more of the at least one storage device, the at least one edge device, and/or the at least one storage device of the cloud server.

Executing the transformation of asset data across various devices in a distributed data storage system may provide several advantages, enhancing the overall efficiency and effectiveness of data management within an industrial context. For example, local storage devices may be suitable for quick, simple transformations needed immediately by the local system. Edge devices, which may be provided close to the data sources, may handle more complex transformations. The ability to perform data transformations close to where data is generated or utilized may also significantly reduce latency. Cloud servers may provide substantial processing power and scalability, making them well-suited for executing the most resource-intensive transformations, such as deep analytics and machine learning processes that require aggregating data from multiple sources, for example. Moreover, distributing data transformation tasks across various storage devices may enhance the scalability and flexibility of the distributed data storage system. As data volumes grow or computational demands shift, the system may dynamically allocate transformation tasks to the device that is best suited for the task at that moment. This capability may ensure that the system can adapt to changing needs without overloading any single component, maintaining optimal performance throughout. Overall, the ability to execute transformations across different devices within a distributed data storage system may not only tailor the processing workload based on the capabilities and location of each device but also significantly improve the system's responsiveness, efficiency, and scalability, for example.

In an example, the one or more operational data may be at least indicative of a measured value from one or more sensors, information on an energy consumption of the one or more industrial plants, information on a current status of the one or more industrial plants, information on a production process and/or setting and configuration of a controller that controls the production process, wherein the operational data may be first compressed on the at least one storage device of the one or more industrial plants, then on the at least one edge device and then on the least one storage device of a cloud server.

The operational data collected may be subject to a multi-stage compression process across various points in the data storage hierarchy. Within the distributed data storage system the at least one storage device of the one or more industrial plants may be connected to the at least one edge device that may be further connected to the at least one storage device of a cloud server. Thus, the different entities of the distributed data storage system may form a multi-tiered data handling architecture. For example, the first data compression may e.g., occur on storage devices located directly within the industrial plants. This initial compression may reduce the volume of raw data gathered from sensors and other sources, making it more manageable and more resource-saving to store locally and/or transmit further, for example. As the compressed asset data moves from local storage to edge devices, which may be provided closer to the data sources but not necessarily on-premises, it may undergo a second compression. Edge devices may handle more sophisticated compression algorithms due to their more robust processing capabilities, for example. This stage of compression may e.g., further reduce the data size, preparing it for long-distance transmission to the cloud, thereby saving bandwidth. Once the compressed asset data reach cloud servers, it may undergo additional compression. This final compression may be particularly useful for long-term storage and for making the asset data more manageable for complex processing tasks such as machine learning models or large-scale data analytics, for example. Cloud-based compression may further allow for an even greater reduction in storage requirements and facilitate faster access to and analysis of large datasets overtime. By reducing the size of the asset data at each of the storage locations of different entities, the distributed data storage system e.g., may minimize the bandwidth required for data transfers between devices and locations and reduces network load. Additionally, smaller data size may mean faster processing times, whether for real-time monitoring, immediate operational adjustments, or advanced analytics, for example. Further, by compressing the asset data before it is stored, especially in the cloud, may significantly save storage capacity.

In an example, the usage data may be based on access logs and/or cached access requests of the distributed data storage system.

Access logs e.g., may be records that track every instance of data access within the distributed data storage system. These access logs typically contain details such as the identity of the requester, the time of access, the specific data accessed, and the purpose of access. By analyzing these access logs, the system may identify which asset data is accessed frequently, at what times, and by which components or users, for example. Cached access requests may refer to the storing of frequently requested asset data in a cache memory, which is a faster type of storage that reduces the time it takes to access the asset data again. By monitoring which asset data may be stored in the cache and the frequency of access, the distributed data storage system may gain insights into the most commonly used asset data, for example. Using real-world access or usage patterns such as access logs and/or cached access requests may allow the distributed data storage system to distribute data more strategically. For instance, data that may be frequently accessed may be moved closer to the point of use, such as to edge devices, thereby reducing latency and improving response times for critical operations. Thus, distributing asset data based on access logs and/or cached access requests may ensure that frequently accessed data is readily available, reducing latency and improving the performance of applications that rely on this asset data, for example. For example, a predictive maintenance system in an industrial plant may need rapid access to machine performance data; having this data on an edge device rather than in a distant cloud server may significantly enhance the system's effectiveness.

In an example, distributing of the asset data among the multiple storage locations may be further based on one or more predictions of potential changes in a future usage of the asset data, wherein the one or more predictions may be determined using a machine learning algorithm trained based on the access logs and/or the cached access requests.

Distributing asset data may not only rely on usage patterns derived from access logs and cached access requests but also may comprise predictions of how data usage might change in the future. This predictive element may be important for proactive system management, enabling the distributed data storage system to adjust data distribution strategies based on anticipated needs rather than solely reactive measures, for example. For example, machine learning algorithms may be trained on historical asset data from access logs and cached access requests to identify patterns and trends that may not be immediately apparent. By analyzing this historical asset data, machine learning models may be able to forecast potential increases or decreases in data usage for certain types of asset data. For instance, if a machine learning model may predict an increased demand for specific sensor data e.g., due to seasonal changes in production, the system may proactively redistribute this asset data to more accessible storage locations. For example, a manufacturing plant may experience higher data usage for certain sensors during specific periods of high production. Thus, incorporating predictions of potential changes in a future usage of the asset data, may not only enhance the dynamic capabilities of a distributed data storage system but also may ensure that the system remains proactive rather than merely reactive.

In an example, the method may further comprise obtaining current distribution data indicative of a current distribution of the asset data among the multiple storage locations, wherein the distributing of the asset data among the multiple storage locations may be further based on the obtained current distribution data.

Current distribution data may e.g., refer to a comprehensive snapshot of where various pieces of asset data are currently stored among the multiple storage locations. For example, this may comprise data on which specific servers, edge devices, or local storage devices currently hold certain datasets of asset data. The current distributing data may further comprise one or more information of such as the volume of asset data, the access frequency, last access time, or storage time data at each location, for example. For example, the distributed data storage system may regularly obtain current distribution data, detailing where all relevant asset data is stored among storage locations of different entities of the distributed data storage system. The distributed data storage system may analyze this current distribution data to determine how effectively the asset data is being utilized. For example, the distributed data storage system may identify that certain critical asset data stored on cloud servers has high access latency impacting real-time decision-making on the production line. Based on this analysis, the distributed data storage system e.g., may redistribute asset data to reduce latency and improve efficiency. For instance, it may move frequently accessed asset data from the cloud storage to the edge devices which may be closer to where production decisions or similar are made, thereby ensuring that this asset data is more quickly accessible.

In an example, the method may further comprise comparing the current distribution data with the usage data to generate a storage request for moving the asset data from one storage location to another and/or to generate a deletion request among the multiple storage locations for deleting data from a storage location.

The distributed data storage system may use both current distribution data and usage data to make informed decisions about moving or deleting data across multiple storage locations. This may be achieved by comparing the current distribution data and usage data to generate specific storage or deletion requests. The distributed data storage system may regularly obtain and update the current distribution data, which shows where different data sets are stored within the distributed data storage system, and may further track usage data, which records how frequently and by whom different data sets are accessed, for example. The current distribution data may be regularly compared with the usage data. For example, if asset data stored on a cloud server may be frequently accessed by processes that operate closer to edge devices, this might indicate a suboptimal data placement. Based on the comparison, the system generates specific requests. If certain asset data is more frequently accessed than currently anticipated, the distributed data storage system may generate a storage request to move this asset data closer to where it is most needed, such as from a cloud server to an edge device, for example. Conversely, if asset data may be rarely accessed or may be no longer necessary for current operations, the distributed data storage system may generate a deletion request to remove this asset data from storage, thereby freeing up resources.

In an example, the storage request and/or the deletion request may be only forwarded among adjacent storage locations of the different entities of the multiple storage locations.

Within the distributed data storage system the different entities of the multiple storage locations may be provided in a hierarchical manner. This may mean that the at least one storage device of the one or more industrial plants may be connected to the at least one edge device that may be further connected to the at least one storage device of a cloud server. The storage and/or deletion requests may not be restricted to one storage location or in other words static. For example, asset data that may be marked for deletion at one storage location may become a storage requirement at another storage location of a different entity of the distributed data storage system. This may mean, that when a storage or deletion request may be generated, it may be only forwarded to adjacent or neighboring storage locations rather than across the entire distributed data storage system, for example. For instance, if asset data may need to be deleted or moved from a storage device of the one or more industrial plants, the request might be forwarded to the nearest data storage instead of directly to the central cloud storage or another edge device that is not geographically or logically adjacent. Additionally, if asset data in the cloud server may be marked for deletion, the distributed data storage system may first check if there's a need for this asset data at the edge devices, for example. Similarly, the storage device of the one or more industrial plants may first generate a storage and/or deletion requirement for the edge device and only in the next assessment the same asset data may become a cloud server requirement, for example. It may also be conceivable that asset data stored in the cloud server that may be rarely accessed may be marked for deletion but if the same asset data may start receiving frequent access requests, it might instead be moved to an edge device for quicker access, for example. By ensuring that storage and/or deletion requests are only forwarded to adjacent storage locations, the system may significantly reduce the amount of data traffic among the multiple storage locations of the distributed data storage system, for example.

In an example, the storage request and/or deletion request may be only forwarded when the corresponding asset data is not requested n times in succession, wherein n is a positive absolute number which represents a configurable threshold.

For example, the forwarding of storage or deletion requests within the distributed data storage system may only executed when the asset data in question has not been requested a certain number of times consecutively. This threshold, denoted by the variable "n," may be configurable, allowing the system to adapt the sensitivity of its data management responses based on operational needs or strategic priorities. In other words, the distributed data storage system may comprise a condition-based trigger for initiating storage or deletion requests. This condition may be based on the frequency of data access. For example, if asset data has not been accessed (or requested) "n" consecutive times, where "n" is a predetermined threshold, only then a storage or deletion request may be forwarded to the next appropriate storage location. The threshold "n" may be configurable, meaning it can be set and adjusted according to specific operational requirements or strategic decisions, for example. This flexibility may ensure that data management decisions are not made hastily and that they reflect more sustained trends in data usage rather than temporary or anomalous fluctuations. By making it less likely for the system to change configurations frequently, the stability of the data storage environment may be enhanced.

In an example, the method may further comprise, obtaining a retention period for storing the asset data in any one of the multiple storage locations, and removing the asset data from the storage location, in which it is stored for the retention period when the retention period expires.

It is noted that the above aspects, examples and features may be combined with each other irrespective of the aspect involved.

The retention period may be e.g., determined based on factors like the operational relevance of the asset data, the potential future utility for analysis, or historical records, or others. For example, asset data that may be relevant for day-to-day operations may have a shorter retention period if it loses relevance quickly. For example, real-time production data might be important for immediate operational adjustments but may not hold long-term value once the specific production cycle is complete. Some asset data may be retained for longer periods if it has potential utility for future analytical tasks. This may e.g., include trend analysis, predictive maintenance forecasting, or long-term performance assessments. Retaining this asset data may allow for a more substantial historical dataset that may improve the accuracy and effectiveness of predictive models. In another example, asset data that may serve as a historical record, such as compliance data or significant operational milestones, or similar, may be retained for longer periods. Certain types of data may be retained for predefined periods specified by law or industry standards, for example. For instance, environmental monitoring data in a chemical plant may need to be kept for several years as per environmental protection regulations. The retention period for each type of asset data may be tailored to balance operational needs with potential future utility and compliance requirements, for example. The distributed data storage system may automatically tag each asset data set with its appropriate retention period upon entry into the distributed data storage system, and as each period expires, the distributed data storage system may evaluate whether the asset data should be deleted, or adjusted, for example. By tailoring retention periods based on the specific needs and value of each type of asset data, the distributed data storage system may ensure that storage resources are utilized efficiently. This may prevent the wasteful use of storage for asset data that no longer holds operational relevance or legal necessity, thereby optimizing storage capacity and reducing unnecessary data clutter, for example. Further, storage that has become free, e.g., due to the deletion of redundant data, may become the storage requirement of a neighboring entity.

According to a second aspect of this disclosure, there are provided one or more computer program products comprising instructions which, when executed by a distributed data storage system, causes the distributed data storage system to carry out the method of the first aspect of this disclosure. The computer program product(s) may be a computer program or computer programs as such, meaning a computer program consisting of or comprising program code to be executed by the distributed data storage system, in particular computers. Alternatively, the computer program product(s) may be a product or products such as a data storage(s), in particular computer-readable data storage medium(s), on which the computer program(s) may be temporarily or permanently stored. The execution of these programs by a distributed data storage system may involve running the computer programs on various devices and servers spread across different locations of the distributed data storage system but networked together. This distributed nature of the distributed data storage system may allow for robust data handling capabilities, where data may be processed and managed close to where it is generated or most frequently used, thus enhancing efficiency and reducing latency.

According to a third aspect of this disclosure, there is provided a distributed data storage system configured to carry out the method according to the first aspect of this disclosure.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a schematic representation of a distributed data storage system;
Figure 2 shows a schematic representation of another distributed data storage system;
Figure 3 shows a method for distributing asset data among multiple storage locations.

The Figures are schematic only and not true to scale. In principle, identical or like parts, elements, and/or steps are provided with identical or like reference numerals in the Figures.

### DETAILED DESCRIPTION OF THE INVENTION

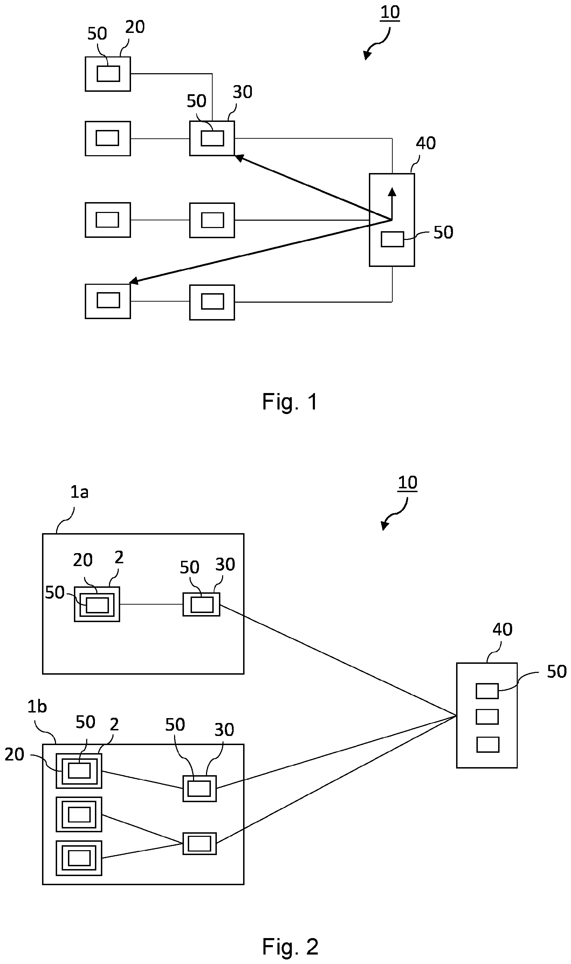

Figure 1 schematically shows a representation of a distributed data storage system 10. The distributed data storage system 10 comprises different entities of multiple storage locations such as several storage devices 20. The storage devices 20 may be integrated within an industrial plant 2 for example. The storage device 20 in industrial plants 2 e.g., may be on-premise storage solutions such as one or more drives that hold data directly within the industrial plant 2, for example. The storage devices 20 are connected to several edge devices 30. Edge devices 30 may be provided at an "edge" of the distributed data storage system 10, these devices process data close to where it is generated. The edge devices 30 are connected to at least one storage device of a cloud server 40. Within the distributed data storage system 10 the different entities of the multiple storage locations may be provided in a hierarchical manner. This may mean that the at least one storage device 20 of the one or more industrial plants 2 may be connected to the at least one edge device 30 that may be further connected to the at least one storage device of a cloud server 40.

The arrows indicate how a search request may be performed within the distributed data storage system 10. In a first step, a client, such as a software or an interactive session by a user, may e.g., initiate a data query. This may be for specific asset data, such as production metrics, machine status, or historical data. The user may e.g., define search criteria, which may include specific parameters like date ranges, asset types, or particular conditions or values. The cloud server 40, which may act as a central hub, may receive the query. The cloud server 40 may be responsible for managing and directing traffic of asset data within the distributed data storage system 10. The cloud server 40 may interpret the query to understand which asset data is being requested and determine the most likely storage location of this asset data based on e.g., previous access patterns, metadata, or indexes, or similar. Once the cloud server 40 identifies the most likely storage locations for the requested asset data, it may distribute the query to those specific storage locations. This could involve sending requests to one or multiple locations, such as the storage devices 20, edge devices 30, and/or the storage location of the cloud server. The storage location for the cloud server could be e.g., a data lake. Each targeted storage location may process the query locally. This may mean that the storage location searches its own storage based on the query parameters to find the requested asset data. It may happen that the requested asset data does not exist anymore in the distributed data storage system 10. This can be realized by calculating whether the data exists (data not existing check), or by distributing the request in the distributed data storage system 10 and getting no response in time, which may always be the case if a component fails or lacks asset data. As each storage location may process its part of the query, it may send the found asset data as a result back to the cloud server. In cases where multiple storage locations are queried, each may return a subset of the overall asset data requested, for example. The cloud server 40 may aggregate the results from all storage locations. This may involve compiling the data into a single dataset, removing duplicates, and potentially reordering the results to best match the request. Additional processing such as sorting, filtering, or applying analytics to the results may be performed at the cloud server 40 to enhance the relevance and utility of the information before it is presented to the client.

It may also be conceivable to perform calculation processes within the distributed data storage system 10. In a first step, the storage locations within the distributed system 10 that may contain the asset data needed for the calculation may be identified. This identification may be important as it may determine where the computation will take place and may ensure that all necessary asset data is considered in the computation process. Once the relevant storage locations are identified, the data storage system 10 may send out calculation requests to each of these storage locations. This may involve transmitting the specifics of the calculation needed so that each storage location knows what computation to perform with the asset data it holds. The calculation process may be performed at multiple storage locations simultaneously, which may significantly speed up the calculation process. Thus, each entity or storage location of the distributed data storage system 10 (cloud server 40, edge device 30, industrial plant 2 storage device 20) may process the calculation request locally with the asset data available to it. This local processing may generate intermediate results, which are partial outcomes that may later be combined to form the final calculation result. After the intermediate results are generated at each storage location, they may be sent back to the cloud server 40, where they may be combined to produce a final result for the calculation request.

The calculation process may specify a priority order for where the intermediate results should be generated if the asset data exists across multiple storage locations, for example. The calculation at the cloud server 40 may be first priority as the cloud server 40 may possess robust computational capabilities and scalability and thus may handle large volumes of data and complex computations more efficiently. Second priority may be the edge device 30. Edge devices 30 may be located close to the data source, such as manufacturing equipment, sensors, or other operational technology within the industrial plant 2. This proximity allows edge devices 30 to process data with minimal latency, which may be advantageous for real-time or near-real-time applications where quick decision-making is important. By leveraging edge devices 30 for processing when possible, the use of cloud servers may be reduced, which might be more expensive. The storage device 20 of an industrial plant 2 may be utilized last for calculation requests. Compared to cloud servers 40 or edge devices 30, a storage device 20 of an industrial plant 2 may have limited computational power.

The search and/or calculation requests may be indicative of a usage of the asset data or in other words may be part of usage data. This usage data e.g., may be logged by the distributed data storage system 10 or more precisely by the cloud server 40. The cloud server 40 may analyze the logged usage data to identify patterns, such as which asset data is accessed frequently or during specific times, or which data requires intensive computational resources, for example. Based on the analysis, asset data may be dynamically redistributed among the storage locations of different entities of the distributed data storage system 10, namely the storage device 20 of the industrial plant 2, the edge device 30, and the storage device of the cloud server 40. This redistribution may be tailored to match the usage patterns, ensuring the asset data is stored where it is most logically and efficiently accessed. For example, Asset data that requires faster access or is used frequently may be moved closer to the point of use, such as to the edge device 30. Conversely, asset data that is less frequently accessed but needs to be retained for regulatory or long-term analysis may be stored in the cloud server 40. Each one of the exemplary storage locations of different entities of the distributed data storage system 10 comprises at least one processing unit or processor, e.g., a CPU, and at least one computer program product 50, e.g., in the form of a computer-readable storage medium. Computer programs are stored on the computer program products 50.

Figure 2 schematically shows a representation of a distributed data storage system 10 and how asset data is transformed or processed for distributing the asset data among the multiple storage locations. The figure shows two factory buildings 1a and 1b. Factory building 1a comprises one industrial plant 2 having a storage device 20, and an edge device 30, wherein the storage device 20 of the industrial plant 2 is connected to the edge device 30. The second factory building 1b comprises three industrial plants 2, each having a storage device 20 and two edge devices 30, wherein the storage devices 20 of the industrial plants 2 are connected to the two edge devices 30. The edge devices 30 of the two factory buildings 1a and 1b are connected to a storage device of a cloud server 40. Thus, the distributed data storage system 10 may use a network of interconnected storage locations of the different entities that may be spread across different geographical areas or hosted on various platforms, for example.

The plant 2 may function as a primary entity for generating and initially processing asset data related to specific production tasks within the factory building 1a. The storage device 20 of the industrial plant 2 may be a local storage within the industrial plant 2 e.g., may be on-premise storage solutions that hold data directly within the industrial plant 2. The storage device 20 may ma e.g., a drive and may serve as a first point of data collection and preliminary storage before the data is forwarded for further processing.

Edge devices 30 may be provided within the factory buildings 1a and 1b and located near the storage devices 20 or at an "edge" of the distributed data storage system 10, to store or process data close to where it is generated. In this example, the edge devices 30 are positioned within the factory buildings 1a and 1b and may be responsible for rapid data processing and localized temporary storage. They may e.g., handle operational data from the industrial plants 2, optimizing response times and processing capabilities at the local level. The edge devices 30 of the two factory buildings 1a and 1b are connected to the cloud server 40. Within the distributed data storage system 10 the different entities of the multiple storage locations may be provided in a hierarchical manner. This may mean that the storage device 20 of the industrial plant 2 may be connected to the edge device 30 which may be further connected to the storage device of the cloud server 40.

The cloud server 40 may serve as a centralized hub and may offer advanced data processing capabilities and storage solutions, for example. It may handle e.g., long-term data storage and complex analyses. The edge devices 30 from both factory buildings 1a and 1b are connected to this cloud server 40, which may integrate, process, and store asset data collected from all the edge devices 30. The cloud server 40 may represent a higher level in the hierarchy of data processing and storage, offering scalable resources and advanced data management capabilities.

Lines from both edge devices 30 converge at the cloud server 40, showing that asset data from the distributed data storage system 10 is either aggregated, further processed, or stored at the cloud server 40.

For example, a chemical plant 2 may equipped with various sensors to monitor critical parameters like temperature, pressure, and flow rate within its production processes. These sensors may generate high-frequency data, recording measurements every millisecond. This raw data may be initially transformed by edge devices 30 located within the plant 2. The first step in this processing may involve compressing the asset data to reduce its size for more manageable storage and transmission. This compression may reduce the frequency of the asset data from milliseconds to seconds, ensuring that key information such as maximum, minimum, and average values over each second is retained without losing critical information. Following the compression, the edge devices 30 may perform data aggregation. This step may involve averaging the asset data over a minute, reducing the amount of asset data further while still maintaining a detailed enough record for short-term operational analysis and immediate decision-making needs. The transformed asset data may then be scheduled for periodic transmission to the cloud server 40, perhaps every hour. This interval may allow the plant 2 to balance between timely data updates and not overwhelming the cloud server 40 with too much data transmission, for example. Once in the cloud server 40, the data may be aggregated further into hourly averages, maximums, or summaries, for example. This level of data may e.g., be useful for daily operational reports, longer-term trend analysis, and broader strategic planning. The cloud server 40 may also perform end-of-day aggregations, producing daily summaries that could include total production volumes, daily average temperatures, or incident counts, for example. Monthly or yearly summaries may be generated similarly, providing strategic insights into plant 2 operations, resource usage, and performance trends. With the asset data now significantly reduced in volume but enriched in context, advanced analytics such as predictive maintenance modeling, efficiency optimization, and safety compliance monitoring may be performed more efficiently. Each one of the exemplary storage locations of different entities of the distributed data storage system 10 comprises at least one processing unit or processor, e.g., a CPU, and at least one computer program product 50, e.g., in the form of a computer-readable storage medium. Computer programs are stored on the computer program products 50.

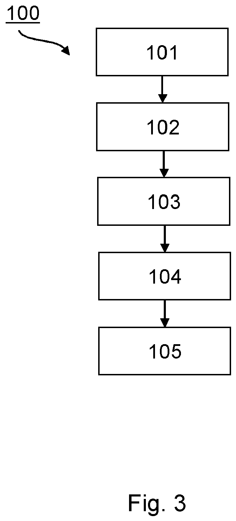

Figure 3 shows a method for distributing asset data among multiple storage locations of a distributed data storage system 10, wherein the asset data is distributed among storage locations of different entities of the distributed data storage system 10, the entities including at least one storage device 20 of the one or more industrial plants 2, at least one edge device 20, and at least one storage device of a cloud server 40.

In a first step 101 usage data may be obtained. The distributed data storage system 10 may e.g., continuously monitor how different types of asset data are accessed and used across the distributed data storage system 10. For example, this may include tracking frequency of access, types of queries made, specific data requests, and user interactions with the asset data. All interactions with the asset data may be logged by the distributed data storage system 10, typically at a cloud server 40 or a central data management hub. These log records may details such as the time of access, the identity of the requester, the type of data accessed, and the performance of the distributed data storage system 10 during access.

In an optional second step 102, the collected usage data may be analyzed to identify patterns of access and demand, for example. This analysis may help to determine which asset data is frequently accessed, which data is rarely used, and the typical data access paths. Advanced analytics and machine learning algorithms may be employed to forecast future demands based on historical usage patterns, for example. This may help to predict changes in asset data access needs and prepare the distributed data storage system 10 for dynamic asset data distribution among the multiple storage locations.

In an optional third step 103, the asset data may be categorized based on usage analysis e.g., according to its access frequency and importance. For example, if certain asset data is more frequently accessed than currently anticipated, the distributed data storage system 10 may generate a storage request to move this asset data closer to where it is most needed, such as from a cloud server 40 to an edge device 30, for example. Conversely, if asset data may be rarely accessed or may be no longer necessary for current operations, the distributed data storage system 10 may generate a deletion request to remove this asset data from storage, thereby freeing up resources.

Asset data may be distributed in a fourth step 104 among the storage locations. Frequently accessed data might be moved closer to the point of use, such as to edge devices 30 in local networks of the distributed data storage system 10, to improve access speed and reduce bandwidth usage, for example. Asset data that may be accessed less frequently may be stored in more resource-efficient long-term storage solutions or deleted when it is no longer needed, for example.

In an optional fifth step 105, the distributed data storage system 10 may continue to monitor asset data usage to see the effects of the changes. This monitoring may check if the redistribution has led to improved performance and access efficiency, for example. Based on e.g., ongoing monitoring results and changing business needs, the distribution strategy may be continuously adjusted. This iterative process may ensure the asset data storage is always optimized for current usage patterns and operational requirements, for example. Feedback from users and performance analytics may contribute to further refinements in the asset data distribution strategy, ensuring agile adaptation to changing asset data usage patterns and distributed data storage system 10 demands, for example.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of' may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

### LIST OF REFERENCE SIGNS

- 1a, 1b: factory building
- 2: plant
- 10: distributed data storage system
- 20: storage device of one or more industrial plants
- 30: edge device
- 40: storage device of a cloud server
- 50: computer program product
- 100: method for the distributed data storage system
- 101 - 105: steps

## Claims

1. A method (100) for distributing asset data among multiple storage locations of a distributed data storage system (10) for one or more industrial plants (2), the asset data relating to one or more assets of the one or more industrial plants (2), the method comprising:
- obtaining usage data indicative of a usage of the asset data; and
- distributing the asset data among the multiple storage locations based on the obtained usage data, wherein the asset data is distributed among storage locations of different entities of the distributed data storage system (10), the entities including at least one storage device (20) of the one or more industrial plants (2), at least one edge device (30) and at least one storage device of a cloud server (40).

2. The method (100) of claim 1, wherein asset data comprises one or more operational data of the one or more industrial plants (2) and/or application data of an application of the one or more industrial plants (2).

3. The method (100) of claim 1 or 2, wherein the asset data is transformed for distributing the asset data among the multiple storage locations, the transformation comprising compression of the asset data and/or aggregation of the asset data.

4. The method (100) of claim 3, wherein the transformation of the asset data is executed on one or more of the at least one storage device (20) of the one or more industrial plants (2), the at least one edge device (30) and/or the at least one storage device of the cloud server (40).

5. The method (100) of claim 3 or 4, wherein the one or more operational data is at least indicative of a measured value from one or more sensors, information on an energy consumption of the one or more industrial plants (2), information on a current status of the one or more industrial plants (2), information on a production process and/or setting and configuration of a controller that controls the production process,
wherein the operational data is first compressed on the at least one storage device (20) of the one or more industrial plants (2), then on the at least one edge device (30) and then on the least one storage device of a cloud server (40).

6. The method (100) of any one of the previous claims, wherein the usage data is based on access logs and/or cached access requests of the distributed data storage system (10).

7. The method (100) of claim 6, wherein the distributing of the asset data among the multiple storage locations is further based on one or more predictions of potential changes in a future usage of the asset data, wherein the one or more predictions are determined using a machine learning algorithm trained based on the access logs and/or the cached access requests.

8. The method (100) any one of the previous claims, wherein the method further comprises:
- obtaining current distribution data indicative of a current distribution of the asset data among the multiple storage locations;
wherein distributing of the asset data among the multiple storage locations is further based on the obtained current distribution data.

9. The method (100) of claim 8, wherein the method further comprises:
- comparing the current distribution data with the usage data to generate a storage request for moving the asset data from one storage location to another and/or to generate a deletion request among the multiple storage locations for deleting data from a storage location.

10. The method (100) of claim 8 or 9, wherein the storage request and/or the deletion request is only forwarded among adjacent storage locations of the different entities of the multiple storage locations.

11. The method (100) of claims 8 to 10, wherein the storage request and/or deletion request is only forwarded when the corresponding asset data is not requested n times in succession, wherein n is a positive absolute number which represents a configurable threshold.

12. The method (100) of any one of the previous claims, the method further comprising:
- obtaining a retention period for storing the asset data in any one of the multiple storage locations; and
- removing the asset data from the storage location, in which it is stored for the retention period when the retention period expires.

13. The method (100) of any one of the previous claims, wherein the distributing of the asset data among the plurality of storage locations further comprises:
- storing asset data that is frequently accessed in the at least one storage device (20) of the one or more industrial plants (2) and/or at least one edge device (30);
- storing asset data that is accessed less frequently in the at least one storage device of a cloud server (40).

14. One or more computer program products (50) comprising instructions which, when executed by a distributed data storage system (10), causes the distributed data storage system (10) to carry out the method (100) of any one of the previous claims.

15. A distributed data storage system (10) configured to carry out the method (100) of any one of claims 1 to 13.
